# EUROPEAN PATENT APPLICATION

(11) **EP 2 910 828 A1**
(43) Date of publication of application: **26.08.2015**
(21) Application number: 15155264.3
(22) Date of filing: 16.02.2015
(51) Int. Cl.: F16K 27/02, F16K 31/06

(54) **Electromagnetic valve**

(30) Priority: 19.02.2014 JP 2014029194
(71) Applicant: TGK CO., Ltd., Tokyo 193-0942 (JP)
(72) Inventor: Matsumoto, Michio, Tokyo, 193-0941 (JP); Sendo, Isao, Tokyo, 193-0942 (JP)
(74) Representative: Schröer, Gernot H.

(57) **Abstract**

In an electromagnetic valve (1), a solenoid (3) includes a cylindrical bobbin (40), an electromagnetic coil (42) wound around the bobbin (40), a yoke (44) that surrounds the electromagnetic coil (42), a fixed iron core (46) that is fixed, coaxially with the bobbin (40), to the yoke (44), and a movable iron core (48) arranged counter to the fixed iron core (46) inside the bobbin (40) in a direction of axis line. The movable iron core (48) including a first iron core (60) that is inserted into the bobbin (40) such that the first iron core (60) is displaceable in the direction of axis line, and a second iron core (62) formed integrally with the first iron core (60) in a position opposite to the fixed iron core (46), the second iron core (62) being arranged counter to an end surface of the yoke (44) outside the bobbin (40) in the direction of axis line.

## Description

The present invention relates to an electromagnetic valve for controlling the flow of a fluid.

In the past and on-going practice, electromagnetic valves are used for various usages and applications (see Reference (1) in the following Related Art List, for instance). In order to control such a widely used electromagnetic valve, a PWM (Pulse Width Modulation) control is employed in terms of reducing the hysteresis in the valve opening characteristics and achieving the power saving, for instance. While a relatively large electric power is required at the power-on of the electromagnetic valve, a smaller power than that at the power-on is required during a stably controlled state (steady state). Thus, keeping the duty ratio of a holding current, during a steady state, lower than that of a starting current helps save the electric power. In particular, there are cases where the magnetic attractive force gets larger than necessary when a fixed iron core and a movable iron core are brought close to each other. Thus, reducing the duty ratio to a degree that it is necessarily and sufficiently small allows the power saving to be further promoted.

### Related Art List

(1) Japanese Unexamined Patent Application Publication No. 2000-170945.

Nevertheless, such an electromagnetic valve as described above imposes a restriction in the size of a solenoid. Thus, reducing the magnetic attractive force does not result in a significant reduction in the holding current. For this reason, this electromagnetic valve still had room for improvement.

A purpose of the present invention is to provide an electromagnetic valve capable of reducing the holding current during a steady state.

One embodiment of the present invention relates to an electromagnetic valve driven by a solenoid. The solenoid includes: a cylindrical bobbin; an electromagnetic coil wound around the bobbin; a yoke that surrounds the electromagnetic coil; a fixed iron core that is fixed, coaxially with the bobbin, to the yoke; and a movable iron core arranged counter to the fixed iron core inside the bobbin in a direction of axis line. The movable iron core includes: a first iron core part that is inserted into the bobbin such that the first iron core part is displaceable in the direction of axis line; and a second iron core part formed integrally with the first iron core part in a position opposite to the fixed iron core, the second iron core part being arranged counter to an end surface of the yoke outside the bobbin in the direction of axis line.

By employing this embodiment, the movable iron core is provided with the second iron core part, which is arranged counter to the yoke in a position located outside the bobbin. Thereby, an attractive force receivable area for the electric conduction amount can increase. As a result, a large attractive force can be obtained when power is being supplied to the solenoid. In other words, for the same supply current value, a larger magnetic attractive force is obtained than when the movable iron core has the first iron core part only. More specifically, increased is an extra or surplus attractive force, which is generated when the fixed iron core and the movable iron core are brought close to each other during a steady state; as a result, the holding current can be reduced by the increased amount of surplus current. This can further promote the power saving.
FIG. 1 is a cross-sectional view showing a concrete structure of an electromagnetic valve according to a first embodiment;
FIG. 2A and FIG. 2B each shows a structure of a separating plate;
FIG. 3 shows an operation of an electromagnetic valve and shows a state where a power is being supplied to a solenoid;
FIG. 4A and FIG. 4B are graphs for explaining a power saving control according to an embodiment; and
FIG. 5 is a cross-sectional view showing a structure of an electromagnetic valve according to a second embodiment.

The invention will now be described by reference to the preferred embodiments. This does not intend to limit the scope of the present invention, but to exemplify the invention.

The present invention will now be described in detail based on preferred embodiments with reference to the accompanying drawings. In the following description, for convenience of description, the positional relationship in each structure may be expressed with reference to how each structure is depicted in Figures.

### [First Embodiment]

The present embodiment is a constructive reduction to practice of the present invention where an electromagnetic valve according to the preferred embodiments is used as a control valve installed in a fuel cell vehicle. This electromagnetic valve is installed in a reaction gas supply passage that connects a supply source of reaction gas and a fuel cell. The electromagnetic valve is opened or closed according to an electric conduction state of a solenoid, and regulates the feed rate of reaction gas to the fuel cell.

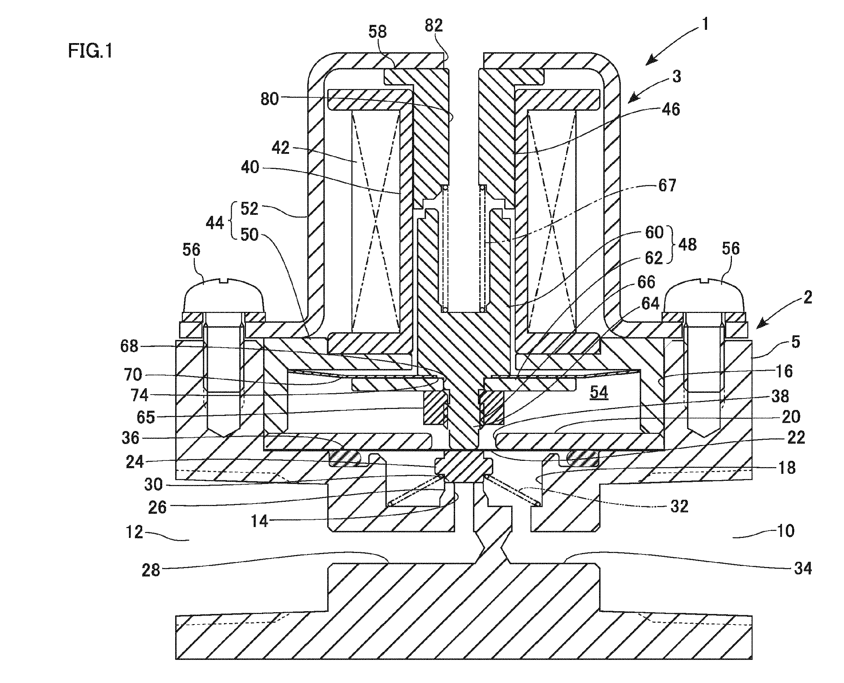

FIG. 1 is a cross-sectional view showing a concrete structure of an electromagnetic valve according to the first embodiment. An electromagnetic valve 1 is configured by assembling a valve unit 2 and a solenoid 3. The valve unit 2 has a body 5, which is of a block-like shape, and the solenoid 3 is assembled to the body 5 in such a manner as to seal off an upper end opening of the body 5.

A lead-in port 10 through which the reaction gas (hydrogen gas) is led in from an upstream side (supply source side) is provided on one lateral side of the body 5. A lead-out port 12 through which the reaction gas is led out to a downstream side (fuel cell side) is provided on the opposite lateral side thereof. A valve hole 14 is provided midway in an internal passage that connects the lead-in port 10 and the lead-out port 12.

A mounting hole 16 for mounting the solenoid 3 is provided in a center of an upper-half portion of the body 5, and the mounting hole 16 is opened upward. A valve chamber 18 is defined in between the mounting hole 16 and the valve hole 14. The mounting hole 16 and the valve chamber 18 are vertically divided by a partition plate 20 and a diaphragm 22. A valve element 24 is so provided as to face the valve hole 14.

A circular boss 26 is raised at a bottom center of the valve chamber 18, and the valve hole 14 is so formed as to run through the circular boss 26. The valve hole 14 is provided along an axis line of the solenoid 3 and communicates with the lead-out port 12 by way of a communicating passage 28. A valve seat 30 is formed on an upper-end surface of the circular boss 26. A valve section is closed and opened when the valve element 24 touches and leaves the valve seat 30, respectively. An upper-end surface of the valve element 24 abuts against a lower-surface center of the diaphragm 22. A spring 32 (functioning as a "biasing member") that biases the valve element 24 in a valve opening direction is set between the valve element 24 and the body 5. A communicating passage 34, through which the lead-in port 10 and the valve chamber 18 communicate, is formed.

The diaphragm 22 is so placed as to cover a bottom of the mounting hole 16, and is so supported as to be held down from above by the partition plate 20, which has been inserted into the mounting hole 16. An O-ring 36 for sealing is set between the bottom of the mounting hole 16 and the diaphragm 22. Both the partition plate 20 and the diaphragm 22 extend in a direction perpendicular to the axis line of the solenoid 3. An insertion hole 38 is formed in a center of the partition plate 20, so that a central portion of the diaphragm 22 is exposed upward therefrom. The diaphragm 22 is deformable, in an upward direction, at a central area thereof corresponding to the insertion hole 38.

The solenoid 3 includes a cylindrical bobbin 40, an electromagnetic coil 42 wound around the bobbin 40, a yoke 44 that surrounds the electromagnetic coil 42, a fixed iron core 46 that is fixed coaxially to an upper-half portion of the bobbin 40, and a movable iron core 48 arranged counter to the fixed iron core 46 inside the bobbin 40 in the direction of axis line. The movable iron core 48 is inserted into a lower-half portion of the bobbin 40.

The yoke 44 is configured by assembling a first yoke 50, which supports the bobbin 40 from below, and a second yoke 52, which surrounds components parts of the solenoid 3 from above. The first yoke 50 is of a bottomed cylindrical shape, and an opening end thereof faces downward so as to be fitted into the mounting hole 16. A working chamber 54 is formed between the first yoke 50 and the diaphragm 22. The bobbin 40 is secured such that a lower end thereof is fitted to a fitting groove provided on an upper surface of the first yoke 50.

The second yoke 52 is obtained by bending and forming a plate-shape magnetic substance in a convex-shape manner, and both end parts of the thus bent second yoke 52 are secured on an upper surface of the body 5 by bolts 56, respectively. This configuration and arrangement enable an underside of the second yoke 52 to press down an upper surface of the first yoke 50 and therefore prevent the falling-off of the first yoke 50. Also, this configuration and arrangement enable the second yoke 52 to press down an upper surface of the fixed iron core 46 from above and therefore prevent the falling-off of the component parts of the solenoid 3.

The fixed iron core 46, which is of a cylindrical shape, is inserted into the upper-half portion of the bobbin 40 from above. A flange portion 58, which protrudes radially outward, is provided at an upper end of the fixed iron core 46, and abuts against the second yoke 52. A lower end portion of the fixed iron core 46 is of a stepped shape such that the inside diameter of the lower end portion thereof becomes larger downwardly.

On the other hand, the movable iron core 48 is configured such that a first iron core 60 (functioning as a "first iron core part"), which is inserted into the lower-half of the bobbin 40, and a second iron core 62 (functioning as a "second iron part"), which is placed in the working chamber 54, are concentrically assembled together. The first iron core 60 is of a stepped cylindrical shape, and an upper-end opening thereof is of a stepped shape complementary to that of the lower end portion of the fixed iron core 46. An elongated operatively-coupled portion 64 is provided downward starting from a lower-end center part of the first iron core 60.

The operatively-coupled portion 64 is coupled to the valve element 24 by way of the diaphragm 22, so that the movable iron core 48 and the valve element 24 are operable integrally with each other, namely can move together. In this case, the diaphragm 22 varies its position, namely is displaceable, while the diaphragm 22 is being held between a lower end surface of the operatively-coupled portion 64 and an upper end surface of the valve element 24. An external thread 66 with which to screw a nut 65 is provided on an outer periphery of the operatively-coupled portion 64. A spring 67 (functioning as a "biasing member"), which biases the movable iron core 48 in a direction separating the movable iron core 48 away from the fixed iron core 46 is set between the first iron core 60 and the fixed iron core 46.

The second iron core 62 is disk-shaped and has an insertion hole 68 in a center thereof. As illustrated in FIG. 1, the second iron core 62 is assembled to the first iron core 60 such that the operatively-coupled portion 64 is inserted into the insertion hole 68, and the second iron core 62 is secured by fastening the nut 65 from below. A separating plate 70 is set between the second iron core 62 and the first yoke 50.

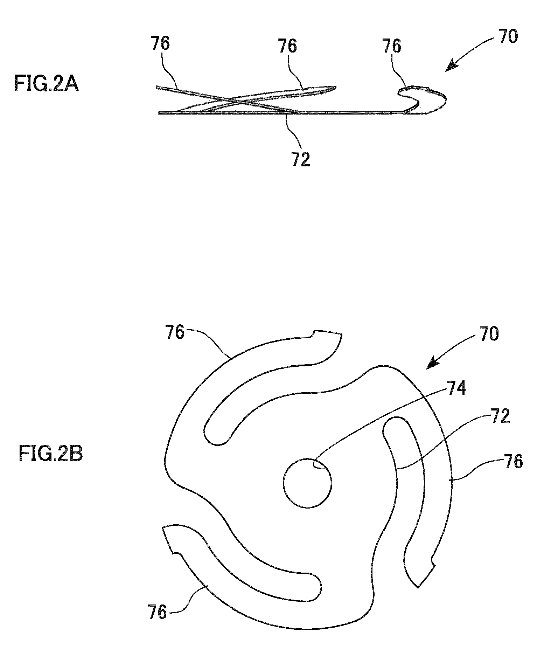

FIG. 2A and FIG. 2B each shows a structure of the separating plate 70. FIG. 2A is a front view thereof, and FIG. 2B is a plane view thereof. The separating plate 70 is a plate spring constructed in a manner such that a nonmagnetic metallic plate is first stamped out into a shape as shown in FIG. 2B by press-formed and is then formed to have a spring characteristic. The separating plate 70 is comprised of a main body 72, which has an insertion hole 74 in a center thereof, and legs 76, which respectively extend from three positions on the outer circumference of the main body 72. The three legs 76 extend from outer peripheral edges of the main body 72 in a circumferential direction (a single direction), and their respective circumscribed circles are concentric with the insertion hole 74. Also, the three legs 76 are extended on one side (upward) relative to the main body 72, so that each leg 76 can have a spring characteristic.

Now, refer back to FIG. 1. The separating plate 70 is assembled to the first iron core 60 while the operatively-coupled portion 64 is inserted into the insertion hole 74. Then the separating plate 70 is secured in such a manner that an inner peripheral edge of the separating plate 70 is held between the first iron core 60 and the second iron core 62. At the same time, an outer peripheral edge of the separating plate 70 is supported such that the outer peripheral edge thereof is stopped by a bottom edge (corners) of the first yoke 50. This configuration and arrangement allows the separating plate 70 to function as an alignment mechanism for guiding the operation and movement of the movable iron core 48 in the direction of axis line outside the bobbin 40. The separating plate 70 exerts a biasing force that separates the movable iron core 48 away from the fixed iron core 46.

Since, in the present embodiment, the separating plate 70 is designed to function as an alignment mechanism, there is provided no sleeve that enables the movable iron core 48 to be slidably supported. Thus, no sliding resistance is applied on the movable iron core 48, thereby suppressing the loss of magnetic attractive force. Also, the present embodiment is advantageous in that no abrasion powder resulting from the sliding movement is produced.

There is formed a relatively large gap or spacing between the movable iron core 48 and the bobbin 40. There is formed a through-hole 80 that runs through the fixed iron core 46 in the direction of axis line, and there is also formed a through-hole 82 in an upper center of the second yoke 52. Air is led into the working chamber 54 through these through-holes and the gap. In other words, the working chamber 54 is filled by atmospheric air pressure that serves as a reference pressure.

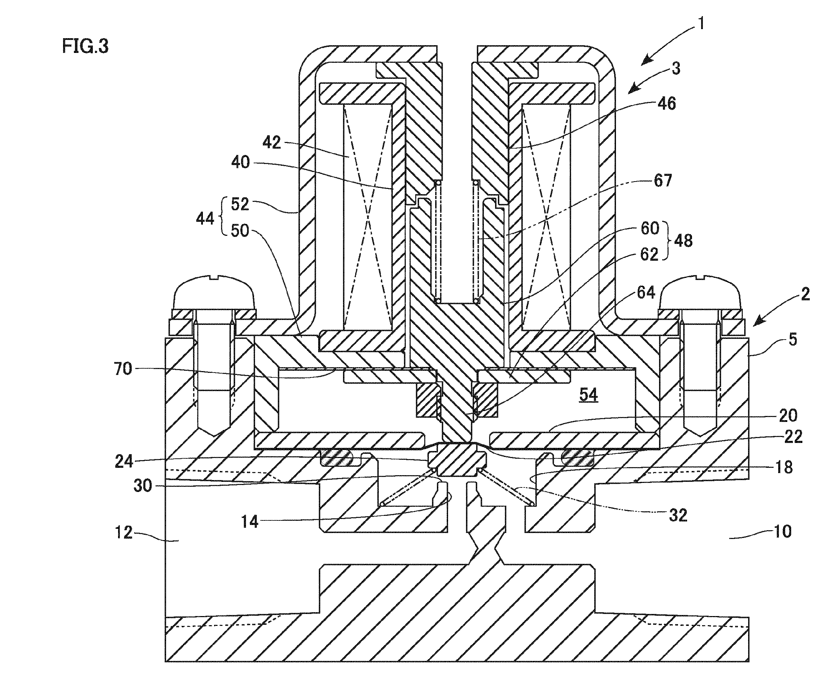

FIG. 3 shows an operation of the electromagnetic valve and shows a conducting state where the power is being supplied to the solenoid 3. FIG. 1, which has already been explained as above, shows a nonconducting state where no power is being supplied thereto. When, in the electromagnetic valve 1, the solenoid 3 is in a nonconducting state where the solenoid 3 is turned off as illustrated in FIG. 1, no attractive force is exerted between the fixed iron core 46 and the movable iron core 48. As a result, the movable iron core 48 is biased downward (in a valve closing direction) by the biasing forces of the spring 67 and the separating plate 70. The biasing forces thereof are transmitted to the valve element 24 by way of the operatively-coupled portion 64 and the diaphragm 22. As a result, the valve element 24 is seated on the valve seat 30, thereby closing the valve section.

When, on the other hand, the solenoid 3 is set to a conducting state where the solenoid 3 is turned on as illustrated in FIG. 3, the attractive force is exerted between the fixed iron core 46 and the movable iron core 48 (first iron core 60). The attractive force is also exerted between the movable iron core 48 (second iron core 62) and the first yoke 50. Thus, the movable iron core 48 resisting the biasing forces of the spring 67 and the separating plate 70 is moved upward (in a valve opening direction). At this time, the valve element 24 is separated away from the valve seat 30 by the biasing force of the spring 32, thereby opening the valve section. As a result, the reaction gas led in through the lead-in port 10 passes through the valve section and then is led out through the lead-out port 12.

At this time, as shown in FIG. 3, the separating plate 70 is vertically compressed with the result that the height thereof becomes equal to the plate thickness, but the gap between the fixed iron core 46 and the movable iron core 48 is kept intact. The then magnetic gap between the fixed iron core 46 and the first iron core 60 is larger than that between the second iron core 62 and the first yoke 50. Since the separating plate 70 is nonmagnetic, the then magnetic gap between the second iron core 62 and the first yoke 50 is equal to the thickness of the separating plate 70. In other words, in the present embodiment, the electromagnetic valve 1 is configured such that the minimum value of magnetic gaps between the fixed iron core 46 and the movable iron core 48 is larger than the thickness of the separating plate 70.

In the present embodiment, as for the areas where the magnetic gaps are formed, the facing area between the second iron core 62 and the first yoke 50 is larger than that between the first iron core 60 and the fixed iron core 46. Thus, making the magnetic gap between the second iron core 62 and the first yoke 50 smaller helps improve the magnetic attractive force. In the light of this, as described above, the magnetic gap between the second iron core 62 and the first yoke 50 is set smaller than that between the fixed iron core 46 and the first iron core 60.

Also, ensuring in this manner that the magnetic gap between the fixed iron core 46 and the first iron core 60 is relatively larger prevents the collision between the fixed iron core 46 and the movable iron core 48. Note that although the second iron core 62 hits the first yoke 50 with the separating plate 70 being placed between the second iron core 62 and the first yoke 50, no large hitting sound occurs therebetween. This is because a reaction force exerted on the second iron core 62 gets larger as the separating plate 70 is gradually compressed.

In such an opening and closing operation process of the electromagnetic valve 1, the movable iron core 48 is stably guided by the separating plate 70 along the axis line. In other words, since the outer peripheral edge of the separating plate 70 is firmly supported by an inner circumferential surface of the first yoke 50, the change of axis line in the separating plate 70 during a deformation process, where the separating plate 70 is compressed, is prevented or suppressed. As a result, the movable iron core 48 is supported at a center of the separating plate 70 and is stably guided along the axis line. Since the separating plate 70 is nonmagnetic, the present embodiment is also advantageous in that a residual magnetic quantity, which is produced when the conduction state (on/off) of the solenoid 3 is switched from on to off, can be reduced. Selecting the plate thickness of the separating plate 70 can regulate the magnitude of the surplus attractive force in the valve section.

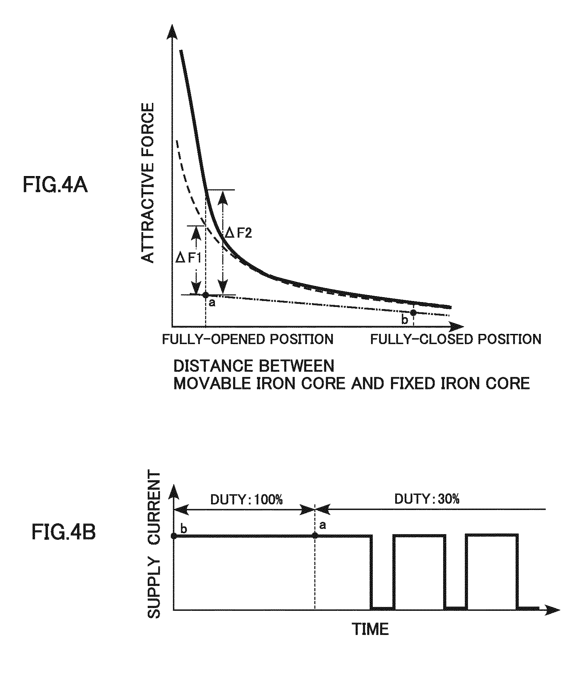

FIG. 4A and FIG. 4B are graphs for explaining a power saving control according to an embodiment. FIG. 4A shows an attractive force characteristic of the solenoid when a supply current value is a rated value, which is constant. The horizontal axis of FIG. 4A indicates the distance between the movable iron core and the fixed iron core, and the vertical axis thereof indicates the magnetic attractive force. A solid line in FIG. 4A indicates an attractive force characteristic obtained when the second iron core is provided as a movable iron core. On the other hand, a broken line in FIG. 4A indicates an attractive force characteristic obtained when no second iron core is provided, as a comparative example. FIG. 4B shows a method for controlling the conduction state of the solenoid according to the present embodiment. The horizontal axis of FIG. 4B indicates the elapse of time, and the vertical axis thereof indicates the supply current.

As shown in FIG. 4A, the attractive force of the solenoid is generally larger as the distance (magnetic gap) between the movable iron core and the fixed iron core becomes smaller. In particular, the magnetic gap therebetween tends to increase sharply when the movable iron core and the fixed iron core are brought closer to each other. Here, suppose that a constant current is supplied to a constantly-closed electromagnetic valve (where the valve section is closed while the solenoid is turned off). Then, the attractive force at a fully-closed position **b** with the valve section being closed is minimum, and the attractive force at a fully-opened position **a** with the valve section being fully opened is maximum. At the same time, the biasing force by the spring in a valve closing direction is being exerted. Thus, a minimum attractive force, which is required to uplift the valve element, resisting the biasing force also varies according to the distance between the movable iron core and the fixed iron core (see a dashed-two dotted line in FIG. 4A). Here, for convenience, this minimum required attractive force will be hereinafter referred to as "lower-limit attractive force" also. This is because the deformation of the spring causes the spring load to vary.

Accordingly, when the opening and closing of the electromagnetic valve are to be controlled, the setting thereof should be made such that the magnetic attractive force generated by turning on the solenoid exceeds its lower-limit attractive force. Thus, in the comparative example represented by the broken line in FIG. 4A, too, the supply current value is to be set such that the attractive force exceeds the lower-limit attractive force (see the dashed-two dotted line in FIG. 4A). When, in this case, the supply current value is set to a constant value, as shown in FIG. 4A, based on the fully-closed position **b,** the attractive force becomes larger than necessary at the fully-opened position **a.** Thus, the supply current value is reduced by an amount of electric current corresponding to a surplus attractive force ΔF1, so that the power saving can be achieved.

In this regard, by employing the present embodiment represented by the solid line in FIG. 4A, the electromagnetic valve 1 is configured such the magnetic attractive force is exerted between the second iron core 62 and the first yoke 50. Hence, a surplus attractive force ΔF2 is larger without increasing the supply current value (ΔF2>ΔF1). The present embodiment utilizes this fact and achieve further power saving.

In other words, as shown in FIG. 4B, when the electromagnetic valve 1 is opened, the duty ratio in the PWM control is set to 100% during a period of time corresponding to the distance changing from the fully-closed position **b** until the fully-opened position **a.** And the duty ratio is set to 30%, for instance, after the distance reaches the fully-opened position **a.** However, the reducing rate of the duty ratio is not limited to the case shown in FIG. 4B and may be set as appropriate such that the holding current can be made small as long as the surplus attractive force ΔF2 remains as a surplus and/or is larger than ΔF1. Controlling the on/off of the solenoid in this manner can significantly reduce the holding current over the comparative example. Note that this PWM control is performed by a not-shown control unit. This control unit has a PWM output unit that outputs a pulse signal having a specified duty ratio; a known configuration may be used for the configuration of such a PWM unit and therefore the detailed description thereof is omitted here.

As described above, by employing the present embodiment, the movable iron core 48 is provided with the second iron core 62, which is disposed counter to the yoke 44 in a position located outside the bobbin 40. This configuration and arrangement increases the attractive force according to the electric conduction amount supplied to the solenoid 3. Then the relationship between this electric conduction amount supplied thereto and the attractive force is made good use of. And the control is performed such that the holding current is suppressed to a smaller value while the attractive force required during a steady state is ensured. As a result, the power saving can be further promoted.

### [Second Embodiment]

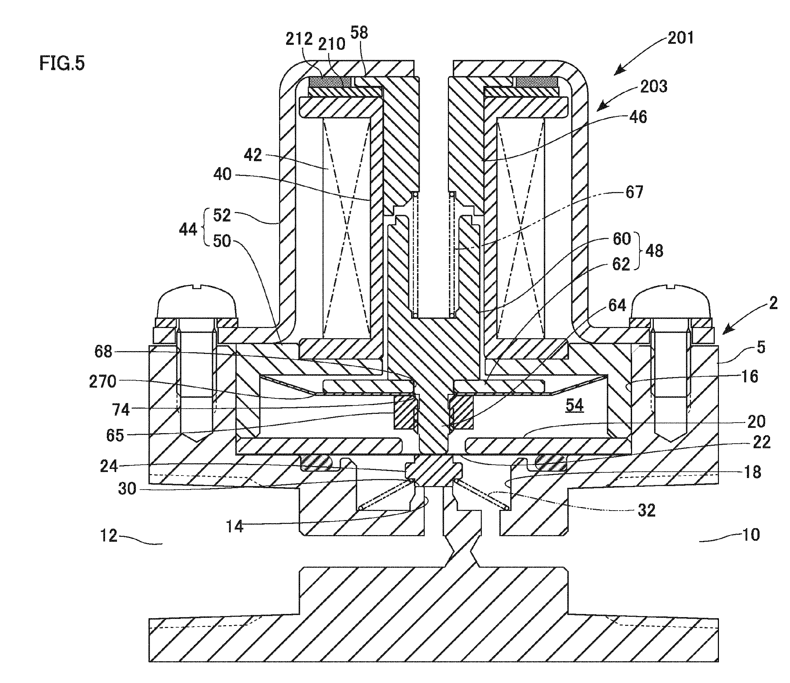

An electromagnetic valve according to a second embodiment differs from the first embodiment in that a permanent magnet is placed within the solenoid and a small magnetic attractive force is produced even while no power is supplied to the solenoid. A description is hereinbelow given centering around different features from the first embodiment. Note that the structural components similar to those of the first embodiment are given the identical reference numerals and the repeated description thereof is omitted. FIG. 5 is a cross-sectional view showing a structure of the electromagnetic valve according to the second embodiment.

An electromagnetic valve 201 is configured by assembling a valve unit 2 and a solenoid 203. A disk 210 made of a magnetic substance is set between the flange portion 58 and the bobbin 40. Also, a permanent magnet 212 is set between the second yoke 52 and the disk 210. The permanent magnet 212, together with the fixed iron core 46, the movable iron core 48 and the yoke 44, form an auxiliary magnetic circuit (hereinafter referred to as "secondary magnetic circuit" also) even while no power is supplied to the solenoid 203. The magnetic poles of the permanent magnet 212 are arranged in such a manner as to be able to form the secondary magnetic circuit. However, the magnetic attractive force producible by the secondary magnetic circuit is smaller than that by the magnetic circuit formed when power is supplied to the solenoid 203 (hereinafter the latter magnetic circuit is referred to as "main magnetic circuit " also).

A separating plate 270 according to the second embodiment is nonmagnetic and is configured roughly similar to the separating plate 70 according to the first embodiment, excepting that the size thereof in a height direction is larger than that of the separating plate 70. The main body of the separating plate 270 is not set between the first yoke 50 and the second iron core 62 but is set between the second iron core 62 and the nut 65, instead. As a result, when the solenoid 203 is in an electrically conducting state, an underside surface of the first yoke 50 and an upper surface of the second iron core 62 abut on each other and therefore the magnetic gap therebetween becomes zero. However, the fixed iron core 46 and the first iron core 60 do not abut on each other even when the solenoid 203 is in the electrically conducting state, and a predetermined magnetic gap is maintained in between them. Similar to the first embodiment, the separating plate 270 can function as the alignment mechanism of the movable iron core 48.

As described above, the first yoke 50 and the second iron core 62 are arranged such that they can be abutted on each other. Thus, for the same supply current value, the magnetic attractive force can be made larger than that in the case of the first embodiment. When both the first yoke 50 and the second iron core 62 abut on each other, the secondary magnetic circuit is also formed by the permanent magnet 212 and therefore the additional magnetic attractive force thereby can also be obtained. As a result, the value of supply current to the solenoid 203 during a steady state can be lowered than that in the first embodiment and thereby further power saving can be achieved.

Also, the duty ratio of the holding current can be 0% if a magnet having a larger magnetic force is selected as the permanent magnet 212. In such a case, the valve section needs to be restored to a closed state when the solenoid 203 is turned off (nonconducting state). For this reason, for example, a not-shown cancelation rod may be inserted into a through-hole formed in the fixed iron core 46, so that the valve section may be restored to a closed state by manually pushing the movable iron core 48. Or alternatively, the current conduction direction to the solenoid 203 may be temporarily reversed in a PWM circuit so as to electrically restore the valve section to a closed state. For example, a reverse current may be delivered to the solenoid 203 for a moment (e.g., one second or less), so that an electromagnetic force resisting the magnetic force of the permanent magnet 212 may be generated.

The description of the present invention given above is based upon illustrative embodiments. These embodiments are intended to be illustrative only and it will be obvious to those skilled in the art that various modifications could be further developed within the technical idea underlying the present invention.

In the above-described embodiments, an example is shown where the first iron core (first iron core part) and the second iron core (second iron core) are separately prepared and then they are assembled together so as to form the movable iron core. In a modification, the first iron core part and the second iron core part may be formed integrally with each other so as to form the movable iron core.

Though not mentioned in the first embodiment, the provision of the separating plate 70 may be omitted. Similarly, in the second embodiment, the provision of the separating plate 270 may be omitted. However, in such a case, a guiding member, other than the separating plate 70 or 270, capable of guiding the movable iron core 48 along the axis line is preferably provided.

Though not mentioned in the first embodiment, the electromagnetic valve may be configured such that the minimum value of magnetic gaps between the fixed iron core 46 and the movable iron core 48 is smaller than the thickness of the separating plate 70. However, the magnetic gap therebetween is preferably set such that the fixed iron core 46 and the first iron core 60 do not collide with each other when power is supplied to the solenoid 3.

In the above-described embodiment, an example is shown as in FIG. 4B where the duty ratio of the starting current supplied to the solenoid is 100%. It goes without saying that, for example, the duty ratio thereof may be 80% and it may also be set to an appropriate percentage according to the specifications. Also, it goes without saying that a percentage value other 30% may be set for the holding current, as appropriate.

In the above-described second embodiment, an example is shown where the permanent magnet 212 is placed between the yoke 44 (second yoke 52) and the fixed iron core 46. In a modification, a permanent magnet may be placed between the yoke 44 (first yoke 50) and the movable iron core 48. Or alternatively, a permanent magnet may be placed between the first yoke 50 and the second yoke 52. In other words, the permanent magnet may preferably be placed by aligning the polarities such that the secondary magnetic circuit can be formed in parallel with the main magnetic circuit; thus, the position of the permanent magnet to be placed and/or the number of permanent magnets used may be appropriately selected.

In the above-described embodiment, an example is shown where the normally-closed valve (where the valve section is closed while the solenoid is turned off) is used as the electromagnetic valve. Instead, the electromagnetic valve may be configured as a normally-opened valve where the valve section is fully opened, while the solenoid is turned off, and is closed while it is turned on. For example, the positional relationship of the fixed iron core 46 and the movable iron core 48 may be reversed, namely vertically interchanged. In such a modification, for example, the operatively-coupled portion 64 may be so provided as to penetrate the fixed iron core 46, and the valve element 24 is integrally coupled to a tip of the operatively-coupled portion 64. In this case, the second iron core 62 is arranged opposite to above the bobbin 40.

The present invention is not limited to the above-described embodiments and modifications only, and those components may be further modified to arrive at various other embodiments without departing from the scope of the invention. Also, various other embodiments may be further formed by combining, as appropriate, a plurality of structural components disclosed in the above-described embodiments and modification. Also, one or some of all of the components exemplified in the above-described embodiments and modifications may be left unused or removed.

## Claims

1. An electromagnetic valve (1, 201) driven by a solenoid (3, 203), the solenoid (3, 203) including:
a cylindrical bobbin (40);
an electromagnetic coil (42) wound around the bobbin (40);
a yoke (44) that surrounds the electromagnetic coil (42);
a fixed iron core (46) that is fixed, coaxially with the bobbin (40),
to the yoke (44); and
a movable iron core (48) arranged counter to the fixed iron core (46) inside the bobbin (40) in a direction of axis line,
the movable iron core (48) including:
a first iron core part (60) that is inserted into the bobbin (40) such that the first iron core part (60) is displaceable in the direction of axis line; and
a second iron core part (62) formed integrally with the first iron core part (60) in a position opposite to the fixed iron core (46), the second iron core part (62) being arranged counter to an end surface of the yoke (44) outside the bobbin (40) in the direction of axis line.

2. An electromagnetic valve (1, 201) according to claim 1, wherein the electromagnetic valve (1, 201) is configured such that a facing area between the second iron core part (62) and the yoke (44) is larger than a facing area between the first iron core part (60) and the fixed iron core (46).

3. An electromagnetic valve (1, 201) according to claim 1 or claim 2, including an alignment mechanism for guiding an operation of the movable iron core (48) in the direction of axis line, the alignment mechanism being located outside the bobbin (40).

4. An electromagnetic valve (1, 201) according to claim 3, wherein the alignment mechanism is constituted by a plate spring (70, 270) that biases the second iron core part (62) in a direction separating the second iron core part (62) away from an end surface of the yoke (44) while the alignment mechanism supports the movable iron core (48).

5. An electromagnetic valve (1, 201) according to claim 1 or claim 2, including a non-magnetic separating plate (70, 270) that is set between the yoke (44) and the second iron core part (62).

6. An electromagnetic valve (1, 201) according to claim 5, wherein the separating plate (70, 270) is constituted by a plate spring (70, 270) that biases the movable iron core (48) in a direction separating the movable iron core (48) away from the fixed iron core (46).

7. An electromagnetic valve (1, 201) according to claim 5 or claim 6, wherein the separating plate (70, 270) is configured such that a displacement of an outer circumferential end thereof is restricted and such that the separating plate (70, 270) has an insertion hole (74) through which the movable iron core (48) is inserted, so that the separating plate (70, 270) functions as an alignment mechanism.

8. An electromagnetic valve (1, 201) according to any one of claim 1 to claim 7, including a permanent magnet (212), which forms a magnetic circuit that generates a magnetic attractive force smaller than that of the solenoid (203) when power is supplied thereto, wherein the magnetic circuit formed by the permanent magnet (212) generates the magnetic attractive force together with the fixed iron core (46), the movable iron core (48) and the yoke (44), even when no power is supplied to the solenoid (203).
